# EUROPÄISCHE PATENTSCHRIFT

(11) **EP 4 105 037 B1**
(45) Veröffentlichungstag und Bekanntmachung des Hinweises auf die Patenterteilung: **28.02.2024**
(21) Anmeldenummer: 22178981.1
(22) Anmeldetag: 14.06.2022
(51) Int. Cl.: B60B 35/00, B60B 35/16, B60K 7/00

(54) **FAHRZEUGSTARRACHSE UND VERFAHREN ZU DEREN HERSTELLUNG**
DEAD VEHICLE AXLE AND METHOD FOR THE PRODUCTION OF SAME
ESSIEU RIGIDE DE VÉHICULE ET SON PROCÉDÉ DE FABRICATION

(30) Priorität: 16.06.2021 DE 102021115615
(43) Veröffentlichungstag der Anmeldung: 21.12.2022
(73) Patentinhaber: Aberg Axles sp. z o.o., 98-300 Wielun (PL)
(72) Erfinder: Ebert, Jörg, 50829 Köln (DE)
(74) Vertreter: Grünecker Patent- und Rechtsanwälte PartG mbB

(56) Entgegenhaltungen:
- DE-A1- 10 120 742
- DE-A1-102013 009 188
- DE-A1-102019 201 518

## Beschreibung

Die vorliegende Erfindung betrifft eine Fahrzeugstarrachse mit den oberbegrifflichen Merkmalen von Anspruch 1. Eine solche Fahrzeugstarrachse ist aus DE 10 2019 201 518 A1 bekannt.

Die in dem eingangs genannten Stand der Technik vorgeschlagene Fahrzeugstarrachse hat einen Achskörperabschnitt, der durch zwei miteinander verbundene Schalenelemente gebildet ist. Zwischen diesen Schalenelementen wird ein Hohlkörper ausgebildet. Bei dem Stand der Technik nimmt der Hohlkörper einen Federbalg zur Abstützung der Fahrzeugstarrachse auf und hat dazu in dem Hohlkörper eine entsprechende Konsole.

Der vorliegenden Erfindung liegt das Problem zugrunde, eine Fahrzeugstarrachse anzugeben, die modernen Antriebskonzepten gerecht wird.

Im Hinblick darauf wird mit der vorliegenden Erfindung eine Fahrzeugstarrachse mit den Merkmalen von Anspruch 1 vorgeschlagen.

Die erfindungsgemäße Fahrzeugstarrachse ist im Wesentlichen gemäß der Vorgabe nach DE 10 2019 201 518 A1 ausgebildet. So kann hinsichtlich der Gestaltung im Wesentlich auf diesen Stand der Technik verwiesen werden. Allerdings hat die erfindungsgemäße Fahrzeugstarrachse keine Federkonsole innerhalb des Hohlkörpers. Vielmehr ist der Hohlkörper dazu angepasst ausgebildet, zumindest eine Komponente eines elektrischen Antriebs aufzunehmen, die innerhalb des Hohlkörpers angeordnet und mit dem Hohlkörper verbunden ist.

Dabei befindet sich zumindest die Abtriebswelle des elektrischen Antriebs üblicherweise koaxial zu den Achszapfen bzw. den Radträgern der Fahrzeugstarrachse.

Aus DE 10 2013 009 188 A1 ist die Anordnung eines Generators in einer Hülse beschrieben, die über eine Flanschverbindung mit einem Achszapfen verbunden ist. Dieser Achszapfen wird von der Antriebswelle zu einem Rad der Fahrzeugstarrachse durchsetzt. Bei dem vorbekannten Stand der Technik treibt dieses Rad den Generator an. Ähnliche Lösungen sind für elektrische Antriebe von Aufliegern von Lastkraftwagen bekannt, die über den elektrischen Antrieb angetrieben werden. Die Flanschverbindung ist allerdings nicht hinreichend torsions- und biegesteif. Die vorbekannten Vorschläge für die Anordnung eines Elektroantriebs im Wesentlichen innerhalb der Fahrzeugstarrachse genügen dementsprechend den Anforderungen nicht.

Hier setzt die vorliegende Erfindung ein. Die beiden Schalenelemente sind - wie in dem vorerwähnten Stand der Technik DE 10 2019 201 518 A1 beschrieben - bevorzugt durch Schweißen miteinander verbunden. So ergibt sich ein formstabiler Hohlkörper. Es hat sich gezeigt, dass dieser Hohlkörper durchaus in der Lage ist, die von dem elektrischen Antrieb das Fahrzeugrad übertragenen Drehmomente widerzulagern. Auch ist der Hohlkörper hinreichend biege- und torsionssteif.

Gemäß einer bevorzugten Weiterbildung der vorliegenden Erfindung hat die erfindungsgemäße Fahrzeugstarrachse eine Einbringöffnung zum Einbringen der zumindest einen Komponente des elektrischen Antriebs in einer Richtung im Wesentlichen rechtwinklig zu der axialen Erstreckung der Antriebswelle. Dadurch ist gegenüber den vorbekannten Lösungen mit einer Hülse zum Einschieben des elektrischen Antriebs ein vergrößerter Bauraum geschaffen, der die Montage vereinfacht. Der Bauraum ist nicht limitiert. Vielmehr kann der Hohlkörper mit jeder Dimension hergestellt werden. Die durch den Hohlkörper bereitgestellte Steifigkeit hinsichtlich Durchbiegung und Torsion kann durch angepasste Wahl der Wandstärke und/oder durch Formgebung der beiden Schalenelemente erreicht werden.

Im Übrigen bietet die erfindungsgemäße Lösung auch die Möglichkeit, die zumindest eine Komponente des elektrischen Antriebs mit zumindest einem der Schalenelemente auf einfache Weise zu verbinden, beispielsweise durch Verschrauben von außen. Auch ein solches Verschrauben wird vereinfacht durch eine Einbringöffnung, die ein Einbringen im Wesentlichen in rechtwinkliger Richtung zur axialen Erstreckung der Antriebswelle erlaubt.

Entsprechendes gilt für die mechanische Dämpfung der zumindest einen Komponente des elektrischen Antriebs. Bei diesen Komponenten handelt es sich üblicherweise um den elektrischen Antrieb als solches und möglichweise um ein Getriebe, welches zwischen der Antriebswelle und dem elektrischen Antrieb zwischengeschaltet ist.

Fahrzeugstarrachsen der eingangs genannten Art unterliegen im Betrieb erheblichen mechanischen Beanspruchungen insbesondere durch Vibration und Schläge. Diese Schläge beanspruchen nicht nur die Fahrzeugstarrachse auf Biegung und Torsion. Vielmehr werden diese Schläge üblicherweise unmittelbar an die innerhalb der Fahrzeugstarrachse montierten Komponenten weitergegeben. Die Toleranz von Komponenten eines elektrischen Antriebs gegenüber solchen Schlägen ist allerdings reduziert. So wird gemäß einer bevorzugten Weiterbildung der vorliegenden Erfindung vorgeschlagen, zumindest eine Komponente des elektrischen Antriebs unter Zwischenlage eines mechanischen Dämpfungselementes gegen das zumindest eine Schalenelement anzulegen. Die Montage erfolgt üblicherweise durch Verschrauben der zumindest einen Komponente unter Zwischenlage des Dämpfungselementes. Das Dämpfungselement dämpft die Vibrationen bzw. Schläge, welchen die Fahrzeugstarrachse ausgesetzt ist, so weit gegenüber der zumindest einen Komponente des elektrischen Antriebs ab, dass eine Beschädigung der entsprechenden Komponente durch die Schläge nicht zu befürchten ist.

In an sich bekannter Weise wird gemäß einer bevorzugten Weiterbildung der vorliegenden Erfindung die Fahrzeugstarrachse über einen Federbalg abgestützt. Dazu bildet zumindest eines der Schalenelemente eine Federkonsole zur Abstützung des Luftfederbalges aus. Die Federkonsole kann dabei insbesondere als Deckel für die zuvor erwähnte Einbringöffnung ausgeformt sein. Der Deckel kann ganz oder teilweise in den Hohlraum eintauchen, sodass die Bauhöhe der Fahrzeugstarrachse gegenüber einem Chassis eines Aufliegers vermindert ist.

Gemäß Ihrem nebengeordneten Aspekt schlägt die vorliegende Erfindung ein Verfahren zur Herstellung einer Fahrzeugstarrachse mit den Merkmalen von Anspruch 6 vor. Dieses Verfahren entspricht im Wesentlichen dem in DE 10 2019 201 518 A1 beschriebenen Verfahren. Auch hinsichtlich bevorzugter Weiterbildungen der Fahrzeugstarrachse kann auf diese Offenbarung verwiesen werden.

Im Hinblick auf eine vollständige Beschreibung der vorliegenden Erfindung wird diese unter Bezugnahme auf die Zeichnung näher erläutert. In dieser zeigen:
- Figur 1: eine perspektivische Seitenansicht eines Ausführungsbeispiels einer Fahrzeugstarrachse der vorliegenden Erfindung;
- Figur 2: eine perspektivische Draufsicht auf das untere Schalenelement der Starrachse nach Figur 1;
- Figur 3: eine perspektivische Draufsicht auf das obere Schalenelement der Starrachse nach Figur 1;
- Figur 4: eine perspektivische Ansicht des unteren Schalenelementes gemäß Figur 2 nach dem Anschweißen von weiteren Bauteilen der Fahrzeugstarrachse und
- Figur 5: eine Längsschnittansicht des Ausführungsbeispiels nach Montage einer Luftfeder.

Die Figuren zeigen einen mit Bezugszeichen 2 gekennzeichneten Achskörper, der durch Fügen eines unteren Schalenelementes 4 und eines oberen Schalenelementes 6 gebildet ist. Die beiden Schalenelemente 4, 6 sind zur Ausformung des Achskörpers 2 durch Schweißen miteinander verbunden. Die Verbindungslinie erstreckt sich dabei üblicherweise in der neutralen Faser einer Biegebeanspruchung des Achskörpers 2.

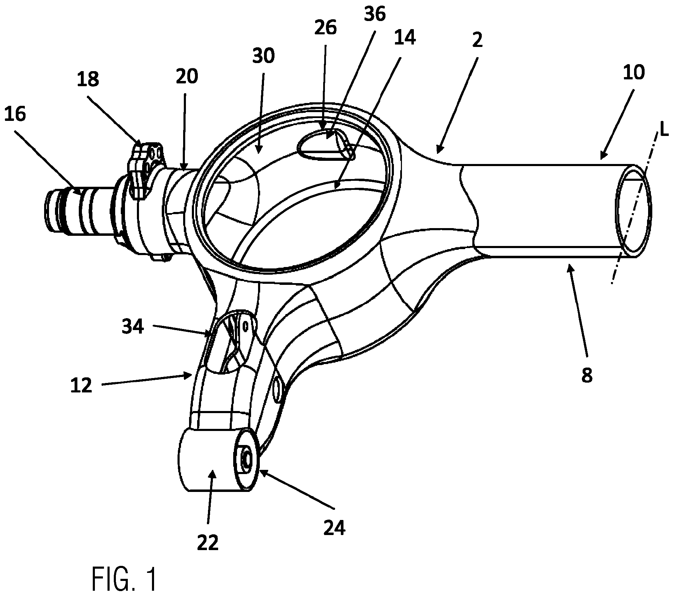

Die beiden Schalenelemente 4, 6 bilden zusammen einen Achskörperabschnitt 10, einen Längslenker 12 und eine Konsole 14 aus. Die vollständige Fahrzeugstarrachse 8 ist in Figur 1 nur zur Hälfte dargestellt. Das distale Ende des Achskörperabschnitts 10 liegt auf der Mittellängsachse des Fahrzeugs, regelmäßig eines Lkw-Aufliegers. So wiederholt sich auf der anderen Seite der mit L gekennzeichneten Längsachse der links davon in Figur 1 dargestellte Aufbau.

Auf der der Konsole 14 gegenüberliegenden Seite in Bezug auf den Achskörperabschnitt 10 ist ein Achszapfen 16 angeschweißt, der mit einem in herkömmlicher Weise ausgeformten Bremsträgerflansch 18 versehen ist. Der Achszapfen 16 ist durch Reibschweißen mit einem Achszapfenanschlussabschnitt 20 verbunden, der jeweils zur Hälfte durch das untere und das obere Schalenelement 4, 6 ausgeformt ist.

Am distalen Ende des Längslenkers 12 ist eine Lagerhülse 22 verschweißt, die weitere Komponenten eines in üblicherweise ausgebildeten Gelenklagers 24 in sich aufnimmt.

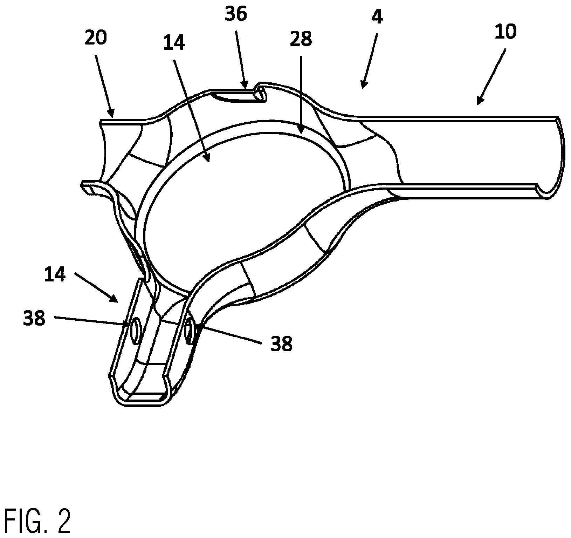

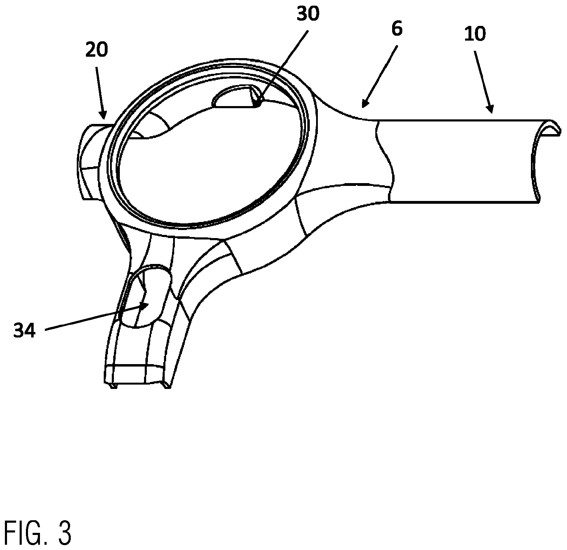

Wie insbesondere die Figuren 2 und 3 verdeutlichen, bildet der Achskörper 2 zwischen den gefügten Schalenelementen 4, 6 einen mit Bezugszeichen 26 gekennzeichneten Hohlkörper aus, sodass der Achskörperabschnitt 10 und der Achszapfenanschlussabschnitt 20 als hohle Rohre mit kreisrundem Querschnitt enden. Auch der Längslenker 12 ist als endseitig konisch spitz zulaufender Hohlkörper an die Lagerhülse 22 angeschweißt.

Die in den Figuren 2 und 3 gezeigten tiefgezogenen Schalenelemente 4 bzw. 6 können für sich entweder den halben Achskörper mit lediglich einem Längslenker 12 und einer Konsole 14 sowie einem Achszapfenanschlussabschnitt 20 ausformen. Entsprechende Schalenelemente 4, 6 können aber in Bezug auf die Längsachse L auch symmetrisch ausgeformt sein und dementsprechend an ihren gegenüberliegenden Enden jeweils einen Achszapfenanschlussabschnitt 20, jeweils einen benachbart dazu vorgesehenen Längslenker 12 und eine dem Längslenker 12 jeweils zugeordnete Konsole 14 ausbilden.

So lässt sich durch Tiefziehen und einige nachstehend noch näher erläuterte Nachbearbeitungsschritte auf einfache und wirtschaftliche Weise ein Achskörper 2 herstellen. Die zur Herstellung des unteren und oberen Schalenelementes verwendeten Ausgangsmaterialien, d.h. die tiefzuziehenden Bleche, haben variierende Wandstärke, um jeweils den unterschiedlichen Beanspruchungen des Achskörpers 2 zu entsprechen. So besteht regelmäßig der Längslenker 12 aus einem dünneren Blechmaterial als der Achskörperabschnitt 10 bzw. der Achszapfenanschlussabschnitt 20. Die unterschiedliche Blechstärke kann beispielsweise durch Konturwalzen (TRB Tailor Rolled Blank) oder durch Verschweißen von Blechen mit unterschiedlicher Wandstärke vorbereitet sein. Der Achslenker 12 hat dabei eine Wandstärke, die zwischen 2 und 4 mm geringer gewählt als die Wandstärke der Abschnitte 10 bzw. 20 ist. So kann beispielsweise das den Längslenker 12 ausformende Blechmaterial eine Stärke von 8 mm haben, wohingegen die Abschnitte 10, 20 mit einer Wandstärke von etwa 10 mm ausgeformt sind.

Wie ein Vergleich der Figuren 2 und 3 unmittelbar verdeutlicht, ist das obere Schalenelement 6 identisch zu dem unteren Schalenelement 4 zunächst durch Umformen ausgebildet, wobei ein in Figur 2 mit Bezugszeichen 28 gekennzeichneter Boden des unteren Schalenelementes 4 zur Ausbildung einer zentralen, an dem oberen Schalenelement 6 vorgesehenen und zu einem Aufnahmeraum 29 führenden Einbringöffnung 30 herausgetrennt worden ist.

Bei dem in Figur 3 gezeigten oberen Schalenelement 6 wurde nicht nur der Boden 28 herausgeschnitten. Vielmehr wurde auch noch eine Eintauchöffnung 34 in eine obere Begrenzungsfläche des Längslenkers 12 eingeschnitten, in die ein nicht gezeigtes Dämpferelement eingreift, welches in an sich bekannter Weise mit einem fahrzeugseitig befestigten Lagerbord bzw. einem daran befestigten Vorbau zusammenwirkt, wie dies im Stand der Technik allgemein bekannt ist. Damit sind die weiteren Bearbeitungsschritte nach Tiefziehen des unteren Schalenelementes erschöpfend beschrieben.

Die Figur 1 zeigt noch eine Einbuchtung 36, die jeweils hälftig durch jedes der Schalenelemente 4, 6 gegenüberliegend zu dem Längslenker 12 ausgeformt ist. Diese Einbuchtung 36 kann während des Tiefziehens der beiden Schalenelemente 4, 6 ausgeformt werden und nimmt einen äußeren Umfangsabschnitt eines beweglichen Bremszylinders einer Schwimmsattel-Bremse in sich auf, wenn diese aufgrund des Verschleißes der Bremse von der Bremsscheibe wegwandert.

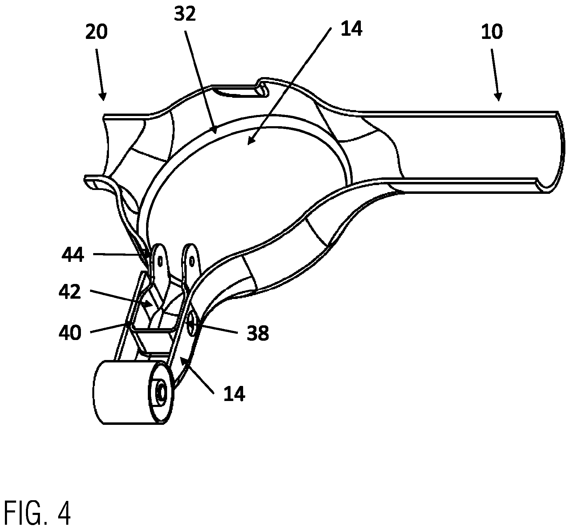

Wie Figur 2 erkennen lässt, sind an dem unteren Schalenelement 4 an gegenüberliegenden, den Längslenker 12 ausbildenden Seitenwänden einander gegenüberliegende Befestigungsbohrungen 38 ausgespart, die der Befestigung eines in Figur 4 mit Bezugszeichen 40 versehenen Lagerelementes dient. Das Lagerelement 40 ist im Wesentlichen U-förmig ausgeformt, wobei die freien Enden gegenüberliegender Schenkel 42 des Lagerelementes 40 sich zwar im Wesentlichen parallel zu den Seitenwänden des Längslenkers 12 erstrecken, jedoch relativ zu den Innenflächen dieser Seitenwände nach innen versetzt und mit Lagerbohrungen 44 versehen sind, die der Aufnahme eines nicht gezeigten Dämpferelementes dient, dessen anderes Ende mit dem fahrzeugseitigen Lagerbock bzw. dem Vorbau dazu verbunden ist. Wie Figur 4 verdeutlicht, liegt diese Lagerbohrung 44 in der Fügeebene der beiden Schalenelemente 4, 6. Das Lagerelement 40 ist als gebogenes Blechstück gefertigt und durch Rundschweißen entlang der Innenumfangsfläche der Befestigungsbohrung 38 mit dem unteren Schalenelement 4 verbunden, bevor das obere Schalenelement 6 auf das untere Schalenelement 4 aufgesetzt und damit verschweißt wird. Die Montage des Dämpferelementes an dem Lagerelement 40 erfolgt durch die Einbringöffnung 30.

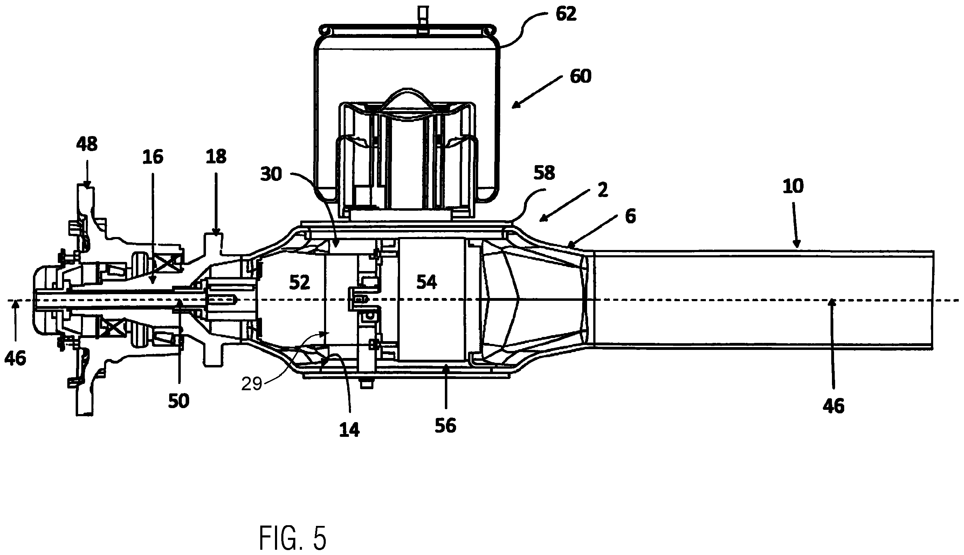

Diese Einbringöffnung 30 liegt in einer Ebene, die parallel zu einer die die Achslinie 46 und die Trennebene zwischen den beiden gefügten Schalenelementen 4, 6 umfassenden Ebene liegt. Die Achslinie 46 durchsetzt dabei den Achszapfen 16 sowie den Achszapfenanschlussabschnitt 20 und den Achskörperabschnitt 10 konzentrisch. Die Achslinie 46 bildet die Rotationsachse eines mit Bezugszeichen 48 gekennzeichneten Radträgers, der drehend über Wälzlager an den Achszapfen 16 abgestützt ist. Dieser Radträger 48 ist mit einer Antriebswelle 50 verbunden, die in Figur 5 den Radträger 48 mit einem Getriebe 52 koppelt, welches an der Abtriebsseite eines elektrischen Motors 54 montiert ist. Der elektrische Motor 54 und das Getriebe 52 sind als bauliche Einheit miteinander verbunden und verwirklicht. Diese bauliche Einheit 52, 54 ist unter Zwischenlage eines Dämpfungselementes 56 gegen das untere Schalenelement 4, speziell der Konsole 14 desselben verschraubt.

Die relativ große Einbringöffnung 30 erlaubt das Einbringen von relativ großen Komponenten 52, 54 des elektrischen Antriebs. Auch ist es ohne weiteres möglich, diese Komponenten 52, 54 zu Wartungs- oder Reparaturzwecken zu entnehmen, ohne dass die gesamte Achse des Aufliegers entfernt werden muss. Die Komponenten 52, 54 des elektrischen Antriebs sind in dem Aufnahmeraum 29 aufgenommen.

Figur 5 verdeutlicht mit Bezugszeichen 58 einen Luftfederträger, der die Einbringöffnung 30 überdeckt und üblicherweise nachträglich mit dem oberen Schalenelement 6 lösbar verbunden und beispielsweise als plattenförmiger Luftfederträger 58 mit dem oberen Schalenelement 6 verschraubt ist. Der Luftfederträger 58 trägt eine Luftfeder 60, die in an sich bekannter Weise einen Luftfederbalg 62 hat, der den Achskörper 2 gegenüber dem eigentlichen Auflieger in an sich bekannter Weise abstützt.

### Bezugszeichenliste

- 2: Achskörper
- 4: unteres Schalenelement
- 6: oberes Schalenelement
- 8: Fahrzeugstarrachse
- 10: Achskörperabschnitt
- 12: Längslenker
- 14: Konsole
- 16: Achszapfen
- 18: Bremsträgerflansch
- 20: Achszapfenanschlussabschnitt
- 22: Lagerhülse
- 24: Gelenklager
- 26: Hohlkörper
- 28: Boden
- 29: Aufnahmeraum
- 30: Einbringöffnung
- 32: Tauchkolben
- 34: Eintauchöffnung
- 36: Einbuchtung
- 38: Befestigungsbohrung
- 40: Lagerelement
- 42: Schenkel
- 44: Lagerbohrung
- 46: Achslinie
- 48: Radträger
- 50: Antriebswelle
- 52: Getriebe
- 54: Motor
- 56: Dämpfungselement
- 58: Luftfederträger
- 60: Luftfeder
- 62: Luftfederbalg

## Patentansprüche

1. Fahrzeugstarrachse (8) mit einem Achskörper (2), an dessen Enden jeweils Achszapfen (16) angeordnet sind, und mit mindestens zwei starr an dem Achskörper (2) befestigten Längslenkern (12) und mit zumindest einem, dem jeweiligen Längslenker (12) zugeordneten Luftfederbalg (62),
wobei zumindest ein sich zwischen den beiden Längslenkern (12) erstreckender Achsköperabschnitt (10) und ein sich daran anschließender Längslenker (12) durch zwei miteinander verbundene Schalenelemente (4, 6) gebildet sind, die zwischen sich einen Hohlkörper (26) ausbilden, **dadurch gekennzeichnet, dass** in dem Hohlkörper (26) zumindest eine Komponente (52, 54) eines elektrischen Antriebs vorgesehen ist, der eine Antriebswelle (50) aufweist, die den dem entsprechenden Achskörperabschnitt zugeordneten Achszapfen (16) durchsetzt.

2. Fahrzeugstarrachse (8) nach Anspruch 1, **dadurch gekennzeichnet, dass** der Hohlkörper (26) eine zum Einbringen der zumindest einen Komponente (52, 54) des elektrischen Antriebs in einer Richtung im Wesentlichen rechtwinkelig zu der axialen Erstreckung der Antriebswelle (50) angepasst ausgebildete Einbringöffnung (30) aufweist.

3. Fahrzeugstarrachse (8) nach Anspruch 1 oder 2, **dadurch gekennzeichnet, dass** die zumindest eine Komponente (52, 54) des elektrischen Antriebs mit zumindest einer der Schalenelemente (4, 6) verbunden, insbesondere von außen verschraubt ist.

4. Fahrzeugstarrachse (8) nach einem der vorherigen Ansprüche, **dadurch gekennzeichnet, dass** die zumindest eine Komponente (52, 54) des elektrischen Antriebs unter Zwischenlage eines mechanischen Dämpfungselementes (56) gegen das zumindest eine Schalenelement (4, 6) anliegt.

5. Fahrzeugstarrachse (8) nach einem der vorherigen Ansprüche, **dadurch gekennzeichnet, dass** zumindest eines der Schalenelemente (4, 6) einen Luftfederträger (58) zur Abstützung des Luftfederbalgs (62) aufweist.

6. Verfahren zum Herstellen einer Fahrzeugstarrachse (8) mit einem endseitig jeweils Achszapfen (16) aufweisenden Achskörper (2) und mit mindestens zwei starr an dem Achskörper (2) befestigten Längslenkern (12) und mit zumindest einer, dem jeweiligen Längslenker (12) zugeordneten Konsole (14) zur Abstützung eines Luftfederbalgs (62),
**dadurch gekennzeichnet,**
**dass** zur Ausbildung zumindest eines Achszapfenanschlussabschnitts (20), eines sich daran anschließenden Längslenkers (12) und eines Aufnahmeraumes (29) für zumindest eine Komponente (52, 54) eines elektrischen Antriebs zwei Schalenelemente (4, 6) aus Blech umgeformt und zur Ausbildung eines den Aufnahmeraum (29) umgebenden Hohlkörpers (26) miteinander verbunden, insbesondere verschweißt werden und zumindest eine der Komponenten (52, 54) des elektrischen Antriebs in dem Aufnahmeraum (29) montiert wird.

7. Verfahren nach Anspruch 6, **dadurch gekennzeichnet, dass** die beiden Schalenelemente (4, 6) zunächst als identische Bauteile umgeformt werden und dass zur Ausbildung eines oberen Schalenelementes (6) ein die Konsole (14) aufweisender Abschnitt des Bauteils abgetrennt wird.

8. Verfahren nach Anspruch 6 oder 7, **dadurch gekennzeichnet, dass** zumindest eines der Schalenelemente (4, 6) aus einem Blech mit variierender Stärke gebildet wird.

## Claims

1. Vehicle rigid axle (8) with an axle beam (2), at the ends of which axle journals (16) or wheel carriers (48), respectively, are arranged, and with at least two trailing arms (12) rigidly attached to the axle beam (2) and with at least one air spring bellows (62) assigned to the respective trailing arm (12),
wherein at least one axle beam section (10) extending between the two trailing arms (12) and a trailing arm (12) adjoining it are formed by two shell elements (4, 6) which are connected to one another and form a hollow body (26) between them,
**characterized in that** at least one component (52, 54) of an electric drive is provided in the hollow body (26), the drive shaft (50) of which passes through the axle journal (16), which is assigned to the respective axle beam section (10).

2. Vehicle rigid axle (8) according to claim 1, wherein the hollow body (26) has an insertion opening (30) designed to be adapted for insertion of the at least one component (52, 54) of the electric drive in a direction essentially at right angles to the axial extent of the drive shaft (50).

3. Vehicle rigid axle (8) according to claim 1 or 2, wherein the at least one component (52, 54) of the electric drive is connected to at least one of the shell elements (4, 6), in particular screwed from the outside.

4. Rigid vehicle axle (8) according to any of the preceding claims, wherein the at least one component (52, 54) of the electric drive bears against the at least one shell element (4, 6) with the interposition of a mechanical damping element (56).

5. Rigid vehicle axle (8) according to claim 1, wherein at least one of the shell elements (4, 6) has an air spring carrier (58) for supporting the air spring bellows (62).

6. Method for producing a vehicle rigid axle (8) with an axle beam (2), at the ends of which axle journals (16) or wheel carriers (48), respectively, are arranged, and with at least two trailing arms (12) rigidly attached to the axle beam (2) and with at least one bracket (14) assigned to the respective trailing arm (12) for supporting an air spring bellows (62),
**characterized in that**
in order to form at least one axle journal connection section (20), a trailing arm (12) connected thereto and a receptacle (29) for at least one component (52, 54) of an electric drive, two shell elements (4, 6) made of sheet metal are formed and connected, in particular welded, to one another in order to form a hollow body (26) surrounding the receptacle (29) and at least one component of an electric drive is mounted in the receptacle (29).

7. Method according to claim 6, **characterized in that** the two shell elements (4, 6) are firstly shaped as identical components and that, to form an upper shell element (6), a section of the component comprising the bracket (14) is cut off.

8. A method according to claim 6 or 7, **characterized in that** at least one of the shell elements (4, 6) is formed from a sheet metal of varying thickness.

## Revendications

1. Essieu rigide de véhicule (8), avec un corps d'essieu (2) aux extrémités duquel sont agencés des fusées d'essieu (16) respectives, et avec au moins deux bras oscillants longitudinaux (12) fixés de manière rigide au corps d'essieu (2) et avec au moins un soufflet à air (62) associé au bras oscillant longitudinal (12) respectif,
dans lequel au moins une section de corps d'essieu (10) s'étendant entre les deux bras oscillants longitudinaux (12) et un bras oscillant longitudinal (12) s'y raccordant sont formés grâce à deux éléments de coque (4, 6) reliés l'un à l'autre et qui constituent entre eux un corps creux (26), **caractérisé en ce qu'**au moins un composant (52, 54) d'un entraînement électrique présentant un arbre d'entraînement (50) traversant la fusée d'essieu (16) associée à la section de corps d'essieu correspondante est prévu dans le corps creux (26).

2. Essieu rigide de véhicule (8) selon la revendication 1, **caractérisé en ce que** le corps creux (26) présente une ouverture d'introduction (30) conçue de manière adaptée pour l'introduction du au moins un composant (52, 54) de l'entraînement électrique dans une direction essentiellement perpendiculaire à l'extension axiale de l'arbre d'entraînement (50).

3. Essieu rigide de véhicule (8) selon la revendication 1 ou 2, **caractérisé en ce que** le au moins un composant (52, 54) de l'entraînement électrique est relié, en particulier est vissé depuis l'extérieur, à au moins un des éléments de coque (4, 6).

4. Essieu rigide de véhicule (8) selon l'une quelconque des revendications précédentes, **caractérisé en ce que** le au moins un composant (52, 54) de l'entraînement électrique repose contre le au moins un élément de coque (4, 6) avec interposition d'un élément d'amortissement mécanique (56).

5. Essieu rigide de véhicule (8) selon l'une quelconque des revendications précédentes, **caractérisé en ce qu'**au moins un des éléments de coque (4, 6) présente un support de ressort pneumatique (58) permettant de soutenir le soufflet à air (62).

6. Procédé de fabrication d'un essieu rigide de véhicule (8) avec un corps d'essieu (2) présentant une fusée d'essieu (16) à chaque extrémité respective et avec au moins deux bras oscillants longitudinaux (12) fixés de manière rigide au corps d'essieu (2) et avec au moins une console (14) associée au bras oscillant longitudinal (12) respectif et permettant de soutenir un soufflet à air (62),
**caractérisé en ce que**
afin de former au moins une section de raccordement de fusée d'axe (20), un bras oscillant longitudinal (12) s'y raccordant et un espace formant logement (29) pour au moins un composant (52, 54) d'un entraînement électrique, deux éléments de coque (4, 6) sont formés à partir de tôle et sont reliés, en particulier soudés, l'un à l'autre afin de former un corps creux (26) entourant l'espace formant logement (29), et au moins un des composants (52, 54) de l'entraînement électrique est monté dans l'espace formant logement (29).

7. Procédé selon la revendication 6, **caractérisé en ce que** les deux éléments de coque (4, 6) sont d'abord formés en tant que composants identiques et **en ce qu'**une section, présentant la console (14), du composant est séparée afin de former un élément de coque (6) supérieur.

8. Procédé selon la revendication 6 ou 7, **caractérisé en ce qu'**au moins un des éléments de coque (4, 6) est formé à partir d'une tôle d'épaisseur variable.
